# EUROPEAN PATENT APPLICATION

(11) **EP 4 492 512 A1**
(43) Date of publication of application: **15.01.2025**
(21) Application number: 24186381.0
(22) Date of filing: 03.07.2024
(51) Int. Cl.: H01M 8/04276, H01M 8/06, H01M 8/18, H01M 8/20

(54) **SYSTEM AND METHOD FOR ON-SITE VRFB ELECTROLYTE PURIFICATION**

(30) Priority: 10.07.2023 US 202363512743 P
(71) Applicant: Largo Clean Energy Corp., Wilmington, MA 01887 (US)
(72) Inventor: PERRY, Michael L., Wilmington, 01887 (US); ALEXANDRESCU, Eric J., Wilmington, 01887 (US); LIEBL, Brian, Wilmington, 01887 (US)
(74) Representative: Reddie & Grose LLP

(57) **Abstract**

There is provided a VRFB commissioning subsystem and process to purify a VRFB electrolyte on-site. In an embodiment, a conventional VRFB system is combined with a novel portable commissioning system for preparing and provisioning a purified electrolyte solution to the VRFB. This on-site purification is especially synergistic with shipping of electrolyte as a gel since the electrolyte can be produced in a densified form and not diluted with water until it is on site.

## Description

### Field

The present disclosure relates to redox flow batteries, electrolyte solutions, and to electrochemical-based purification of electrolyte solutions therefor, and more particularly to a system and a method for on-site vanadium redox flow battery (VRFB) electrolyte purification.

### Background

Electrolytes for batteries and other uses generally need to be free of impurities that are detrimental to those uses. For example, in the context of a redox flow battery, each electrolyte used needs to be free of impurities that foul components of the battery. In a particular example, a vanadium redox flow battery (VRFB) is a system that converts electrical energy into chemical energy and then releases that chemical energy as electricity when there is demand. This type of battery is often paired with a solar and/or wind farm to help smooth out the power production intermittency associated with these renewable energy sources.

A method and related system to prepare a VRFB electrolyte solution for use in a VRFB, for example, to commission such a VFRB, are disclosed in patent US10333164B2, granted June 25, 2019, and entitled "Electrochemical-based purification of electrolyte solutions, and related systems and methods", the entire contents of which are incorporated herein by reference. In brief, and in an embodiment of a method, an electrolyte solution with an initial average valance is provided having at least one impurity (i.e. a non-vanadium impurity) that precipitates out of the solution when the valence of the solution is at or below a precipitation valance - e.g. below 3.0. The valance of the solution is reduced from the initial average valence to a valence below 3.0 to cause the at least one impurity to precipitate out as a solid precipitate. The solid precipitate is mechanically separated while the valance is below 3.0 using a flow-through porous filter or a hydrocyclone to purify the electrolyte solution. Such a method is performed using a dedicated electrolyte-purification system. The purified solution is delivered such as to an installation site of the VRFB and the battery is commissioned with the purified solution.

It is desired to improve electrolyte purification for VFRBs and related methods and systems for provisioning of VFRBs with purified electrolyte solutions.

### Summary

There is provided a VRFB commissioning subsystem and process to purify a VRFB electrolyte on-site. In an embodiment, a conventional VRFB system is combined with a novel portable commissioning system for preparing and provisioning a purified electrolyte solution to the VRFB. This on-site purification is especially synergistic with shipping of electrolyte as a gel since the electrolyte can be produced in a densified form and not diluted with water until it is on site.

### Brief Description of the Drawings

Fig. 1 is an illustration of a battery and commissioning system in accordance with an embodiment where a commissioning sub-system comprises an impurities separator (e.g. a filter) to remove impurities from a negative electrolyte.
Fig. 2 is a flowchart of operations, in accordance with an embodiment, such as for operating the battery and commissioning system of Fig. 1.
Fig. 3 is an illustration of a battery and commissioning system in accordance with an embodiment, where a commissioning sub-system comprises an additional impurities separator (e.g. a filter) to remove impurities from a negative electrolyte flow through a balancing line for providing negative electrolyte from a negative electrolyte tank to a positive electrolyte tank.
Figs. 4A and 4B are each an illustration of a battery and commissioning system in accordance with respective embodiments.
Figs. 5A and 5B are flowcharts of operations, in accordance with embodiments, such as for operation of a battery and commissioning system of Figs. 4A or 4B.
Fig 6 is an illustration of a battery and commissioning system of Fig. 1 further having a large resistor for discharging a cell stack, in accordance with an embodiment.
Fig. 7 is a flowchart of operations in accordance with an embodiment such as for commissioning the system of Fig. 6.
Fig. 8 is an illustration of a portion of a battery and commissioning system, in accordance with an embodiment, showing a commissioning sub-system and selected anode side components of a VRFB system adapted for use with a commissioning sub-system in accordance with the embodiment.
Fig. 9 is an illustration of a filter rinsing subsystem of a commissioning sub-system, in accordance with an embodiment.

### Detailed Description

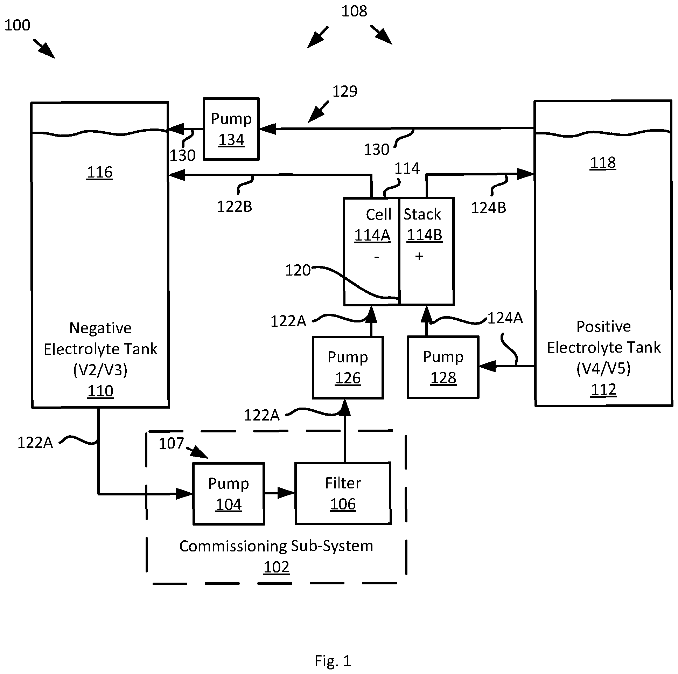

Fig. 1 is an illustration of a battery and commissioning system 100 in accordance with an embodiment. There is shown a commissioning sub-system (CSS) 102 comprising a pump 104 and an impurities separator comprising a filter 106 coupled to a VRFB system 108, for example, one that is configured as a conventional VRFB system. Though filter 106 is shown, a hydrocyclone is a further example of an impurities separator. Filter 106, in an embodiment, comprises a fine-media filter. Preferably a media in the filter is rated less than 2 micron in relation to particle size, and further preferably less than or equal to 0.5 micron.

VRFB system 108 is simplified and generally comprises the additional illustrated components, among others, that are external to the commissioning sub-system 102. VRFB system 108 comprises respective tanks 110 and 112 and a cell stack 114 therebetween. Tanks 110 and 112 comprise a negative electrolyte tank (V2/V3) 110 and a positive electrolyte tank (V4/V5) 112 for storing respective solutions, namely, a negative electrolyte 116, and a positive electrolyte 118. It is understood that the nomenclature "Vn" references vanadium and a respective oxidation state therefor. The oxidation states shown are those that exist during normal operation (i.e., after the "electrolyte formation charge," which is described below.) Though single respective tanks 110 and 112 are shown, multiple tanks can be connected.

Conventionally, cell stack 114 comprises a negative side (114A) and a positive side 114B with a membrane 120 therebetween. Further conventionally, the respective electrolyte solutions 116 and 118 are circulated from the respective tanks 110, 112 to the respective sides 114A, 114B of the cell stack via respective supply lines (e.g. comprising conduits 122A and 124A) and respective return lines (e.g. comprising conduits 122B and 124B). Supply conduits 122A and 124A are coupled to respective pumps (e.g. 126, 128) to assist with circulation. However, unconventionally, and as shown in the present embodiment, commissioning sub-system 102 is coupled into the negative electrolyte supply line (e.g. into conduit 122A). Within CSS 102, pump 104 and filter 106 are coupled via an electrolyte line (generally 107) and the electrolyte line 107 is configured via couplings (not shown) to couple into the negative electrolyte supply line of conduit 122A. Pump 104 assists fluid flow in view of the additional pressure drop across filter 106, for example.

A single tank balancing line 129 or tank exchange line having conduit 130 with a small electrolyte-transfer pump 134 is shown for use to rebalance the electrolyte by transferring electrolyte between the two electrolyte tanks. A second (e.g. opposite direction) balancing line is typically present though not shown for simplicity.

As noted, VRFB system 108 is simplified. For example, not shown are state-of-charge (SOC) detectors such as to measure an electrolyte solution's SOC, preferably measuring for each of the negative and positive electrolyte solutions 116, 118. Also not shown such as for simplicity is a Thermal Management System (TMS) for managing heat generated by VRFB system 108, an electrical load/source, and a Battery Management System (BMS) used to control the battery.

Commissioning sub-system 102 can be coupled to conventional VRFB system 108 such as shown in Fig. 1 for performing commissioning operations as described further herein. Commissioning sub-system 102 can be uncoupled from the commissioned VRFB system 108 such as for normal use of the VRFB system 108. A commissioning sub-system 102 can thus be used with different instances of VRFB systems (not shown), for example, one at a time, to perform commissioning of each of the different instances.

Though not shown, in an embodiment, commissioning sub-system 102 comprises a housing, such as a metal and/or plastic body to contain pump 104 and filter 106. Negative electrode line may protrude through the housing (e.g. via a port) and conduit interfaces/connections such as for coupling to supply conduit 122A may be accessible on an external surface of the housing. One or more apertures, access ports and/or doors are provided to access the interior of the housing such as to access one or both of pump 104 and filter 106. Also contained (not shown) is wiring such as for power and/or signal purposes. The sub-system can be coupled to an external power source, for example, via a suitable electrical plug and wiring extending externally to the housing or the housing can have a port to accept a wire therethrough to couple to a bus or other receptor therein. The housing can provide an external interface such as for switches, etc. to operate CSS 102. The housing should also be designed to serve as secondary containment for any electrolyte that may leak from the CSS 102 or the couplings. The CSS may also have a leak sensor designed to shut down the entire system if a large amount of leakage is detected. In an embodiment, though not illustrated, CSS 102 is mounted on a truck or other transport and preferable is operational while on the truck. In an embodiment, coupling interfaces to couple the CSS 102 and VRFB 108 are provided such as on one side thereof to facilitate easier coupling. In an embodiment, a top thereof is configured to open such that any evolved gases may be vented. In an embodiment, spacing or other configuration is adopted to allow for individuals to work in and around the filter housings to, for example, monitor pressure in the filters and change out the filters.

In an embodiment, CSS 102 comprises a TMS (not shown) to handle the heat generated by a commissioning and purification process. A TMS, in an embodiment, comprises a heat exchanger on the electrolyte line 107 to remove the extra heat that may be generated by the electrolyte purification process. In an example, the heat exchanger comprises a liquid-liquid heat exchanger and the heat exchange is configured to use a coolant liquid, such as ethylene glycol, that is circulated to an air-cooled radiator. In an embodiment, the TMS comprises an active cooling subsystem such as an air conditioner or heat pump. A TMS may use active and passive techniques, for example, actively cooling the liquid (e.g. ethylene glycol) used in a liquid to liquid heat exchanger. A TMS may assist to cool the electrolyte and promote greater precipitation. In an embodiment, a TMS is located/employed upstream of filter 106. In an embodiment, a TMS is not provided, not used if provided, or is operated if provided to in a manner that facilitates precipitation such as at higher temperatures, for example, to promote more favorable kinetics.

Though only a single filter is shown, more than one may be used in a particular line being filtered. Use in a parallel configuration can facilitate removal/replacement of filter media during a continuous charging operation, for example, where fluid is temporarily restricted in one of the parallel courses. Use in a series configuration, for example, with a first coarser rated filter (< 2 micron) followed by a second finer rated filter (e.g. 0.5 micron) may promote more effective filtering. CSS filters 106 may include porous carbon (e.g. carbon papers or cloths) as a filter media. Other materials (e.g. polypropylene filters, or other material (e.g. polymers) that is compatible with the electrolyte can be used. In an embodiment, the filters are 99.00% efficiency filters.

As described further, CSS 102 may comprise one or more additional device(s) to determine when electrolyte-purification process is complete and/or provide a means to sample electrolyte for purity measurement. Such a sample may be measured remotely, off the CSS, for example by a mass spectroscopy device, etc. as further described herein.

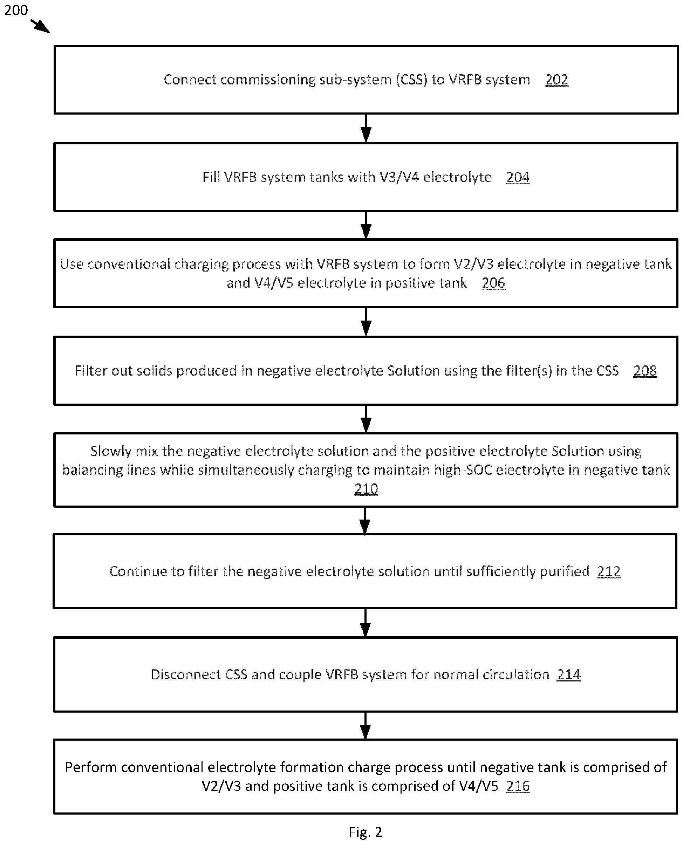

Fig. 2 is a flowchart of operations 200 in accordance with an embodiment. Operations 200 are to be performed using system 100, for example. At 202, operations couple the commissioning sub-system 102 and VRFB system 108, such as shown in Fig. 1. At 204, operations fill respective tanks 110 and 112 with V3/V4 electrolyte solution for commissioning the system 100. Each of the negative and the positive tanks 110, 112 receive similar V3/V4 electrolyte solutions for initiating system 100. V3/V4 electrolyte, typically 50% each, is conventionally used to commission VRFB systems since it is stable and enables using a single electrolyte instead of two different electrolyte compositions.

At 206, operations use a conventional electrolyte formation charging process for VRFB system 108 to form V2/V3 electrolyte (116) in negative tank 110 and V4/V5 electrolyte (118) in positive tank 112. In accordance with the use of CSS 102 as described herein, at 208, operations filter out solids produced in negative electrolyte 116 (e.g., metal-ion impurities reduced to insoluble metals) using the filter(s) 106 of CSS 102. Operations 206 and 208 overlap in time in an embodiment, for example, to protect stack components from impurities.

At 210, operations slowly mix the negative and positive electrolyte solutions 116, 118, for example using balancing lines (e.g. conduit 130 and pump 134), while simultaneously charging to maintain high-SOC electrolyte in negative tank 110. In context and in an example, "slowly" means the flow rate through the balancing lines is at least 5X lower than the flow rate of electrolyte through one side of the stack. In context and in an example, "slowly" means that the flow rates are that which are typically employed by remixing operations within the batteries - in line with the primary design of those pumps. In an embodiment, a mixing rate is determined by the rate at which heat can be removed from the system. Heat will be generated when high and low valence electrolyte mix together, i.e. during the mixing provided by these pumps. In an embodiment, mixing should start after V2/V3 is formed in negative tank 110, for example. By way of an example, which is non-limiting, it is understood that balancing flow is in both directions. Assuming a charging at a rated system power output with a 10-h system (i.e., tanks are sized to be able to discharge at rated power for 10-h/cycle), then such a system should be capable to mix at an equivalent rate to maintain a fairly steady SOC. Mixing for an extended period can ensure a majority of electrolyte has spent some time in both tanks, for example, for > 20-h (e.g., > 2X the discharge time).

At 212 operations continue to filter the negative electrolyte until it is determined that the electrolyte has been sufficiently purified. In an embodiment, a control system is configured to control purification operations and stop and/or signal for stopping same. Purification is described further herein below, for example. At 214 operations disconnect CSS 102 and VRFB system 108, coupling tank 110 to circulate via pump 126 without passing electrolyte through commissioning sub-system 102. At 216, a conventional electrolyte formation charge process is performed until negative tank is comprised of V2/V3 and positive tank is comprised of V4/V5.

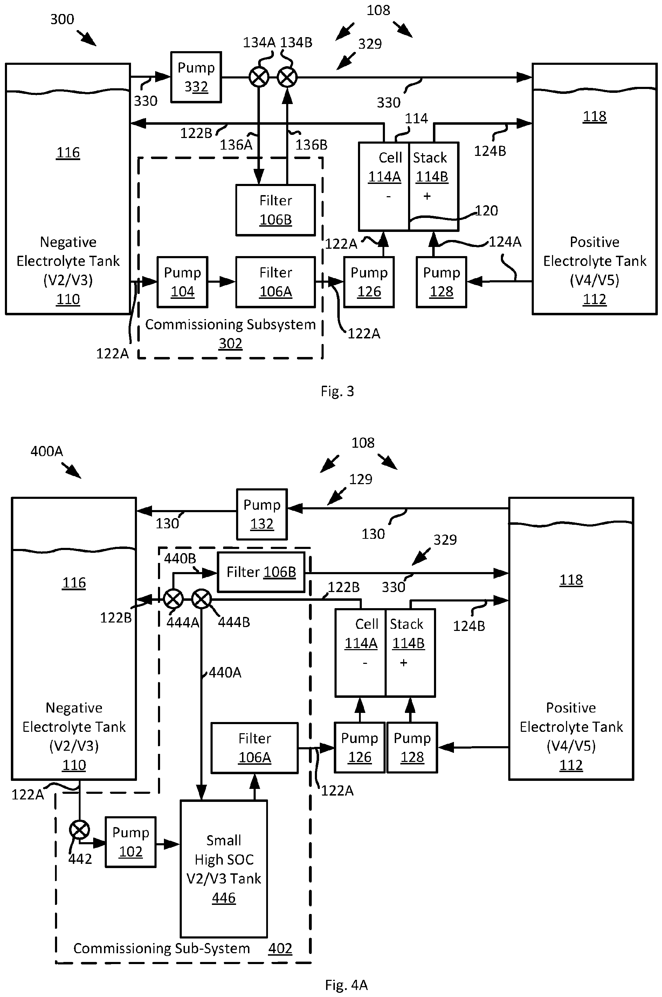

Fig. 3 is an illustration of a battery and commissioning system 300 in accordance with an embodiment. System 300 is similarly configured to system 100. It is noted that in system 300, there is a commissioning sub-system 302 in place of commissioning sub-system 102, and commissioning sub-system 302 is similar to sub-system 102. However, in commissioning sub-system 302, there are two impurity separators, namely filters 106A and 106B.

Filter 106A is similarly coupled via supply conduit 122A for circulating electrolyte to Cell Stack 114. Filter 106B is coupled to filter impurities in negative electrolyte that is transported via a balancing line 329 between tanks 110 and 112. While not bound by any theory of operations, it is believed, such as through observation, that precipitates form in a negative tank, especially when electrolyte therein is at high SOC. Fig. 3 shows conduit 330 coupling to an electrolyte transfer pump 332, similar to conduit 130 coupling to the electrolyte transfer pump 134 of Fig. 1, but in Fig 3 the flow of electrolyte is in an opposite direction. Balancing line 129, operating in the other direction, can be provided and is not shown for simplicity.

Conduit 329/330 is coupled via a pair of valves 134A, 134B to inlet conduit 136A and outlet conduit 136B to feed filter 106B in balancing line 329. The valves 134A, 134B are configured to permit fluid to flow through conduit 329 (e.g. in a first position) or to shunt fluid through filter 106B (e.g. in a second position). Valves herein may occupy discrete positions between full operational ranges. Other arrangements may be contemplated. For example, valves 134A, 134B and conduit 136A, 136B could be components of commissioning sub-system 302.

Operations of system 300 and its sub-system 302 is, in an embodiment, similar to operations 200. Operations 210, for example, can be adapted to have fluid flowing to filter 106B such as when mixing the negative and positive electrolytes via line 329.

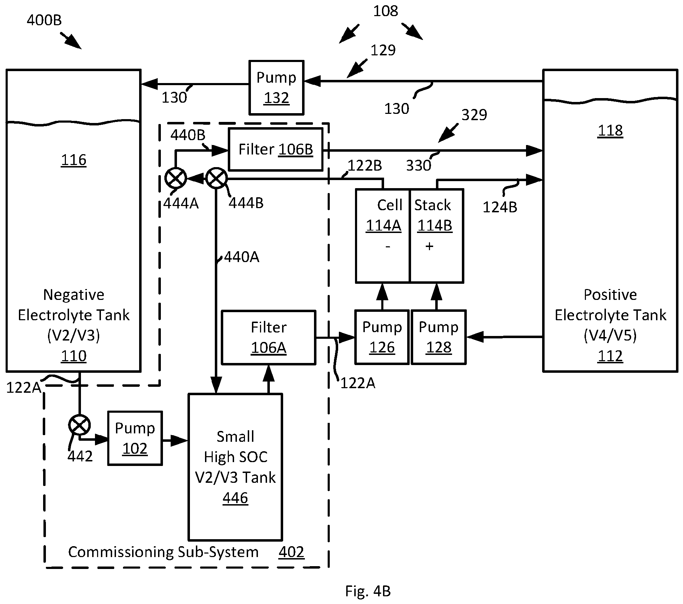

Figs. 4A are 4B are each an illustration of a battery and commissioning system 400A and 440B in accordance with respective embodiments. Systems 400A and 400B are each similarly configured to system 100. It is noted that in system 400, there is a commissioning sub-system 402 in place of commissioning sub-system 102, and commissioning sub-system 402 is similar to sub-system 102. However, in commissioning sub-system 402, there are two impurity separators, namely filters 106A and 106B, additional conduit 440A, 440B, and valves 442, 444A, 444B as further described. In addition there is a small high-SOC V2/V3 tank 446 (e.g. small tank 446) coupled between pump 102 and filter 106A.

Balancing lines 129 and 329 are shown, where line 329 is coupled to the commissioning sub-system 402, after filter 106B, as further described. Valves 444A and 444B are capable of coupling to return conduit 122B from cell stack 114. In system 400A, conduit 122B can pass negative electrolyte (e.g. when the valves 444A and 444B are in a first position) through sub-system 402 to tank 110. Such a configuration can be optional. As shown in System 400B, conduit 112B does not extend through valve 444A to negative electrolyte tank 110. Tank 110 receives electrolyte from line 130 only in system 400B. In each system 400A and 400B, valve 444A is coupled to conduit 440B to shunt fluid (e.g. when the valve 444A is in a second position in system 400A) to feed filter 106B, which filter 106B in turn is capable of coupling to conduit 330 of balancing line 329, to transport negative electrolyte to tank 112 when in a balancing configuration. Though not shown, in an alternative embodiment of system 400B, for example, only one of valve 444A or 444B is present. In an embodiment, the one or more valves are continuous control valves (i.e. can be open from 0 to 100%) such that a portion of fluid is directed in one direction (e.g. 10%) and a complementary portion (90%) is directed in another direction. In an embodiment, conduit (e.g. 440B) and/or valves are associated with respective (additional) pumps (not shown). For example, conduit 440B can be coupled to a pump (not shown) such as prior to filter 106B. Valve 444B is also coupled to conduit 440A to shunt fluid (e.g. when the valve 444B is in a second position) to small tank 446 such as when in a (first) charging configuration. Valve 442, capable of coupling to supply conduit 122A, can be in an open or closed position to provide, or stop fluid from being provided, from tank 110 to pump 102 for supplying small tank 446. In an embodiment, for example with continuous control valves that permit directing a portion of fluid in one direction and a complementary portion in another direction, during steady state operation, about 10% of the flow leaving stack 114A in conduit 122B is directed through filter 106B, while the other 90% is returned to the small tank via conduit 440A.

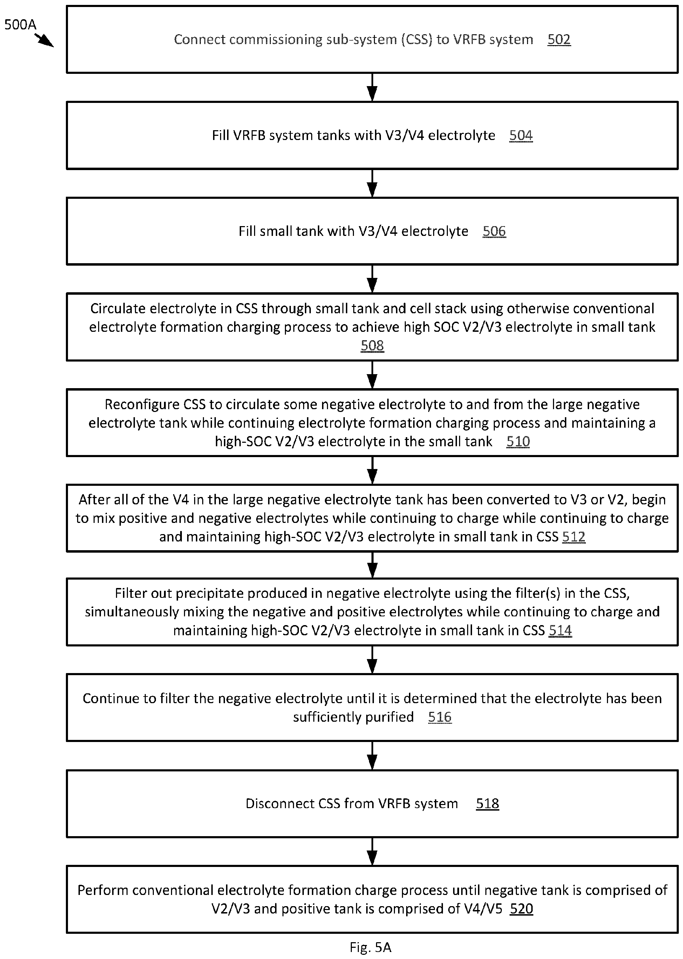

Fig. 5A is a flowchart of operations 500A, in accordance with an embodiment, such as for operation of systems 400A or 400B. Operations 500A are similar to operations 200.

. V3/V4 electrolyte can be provided to small tank 446 such as from tank 110 through valve 442 (e.g. in an open position) and pump 102. During initial charging, valves 442, 444A, 444B are positioned so that only the electrolyte in the small tank 446 is circulated to cell stack 114 (negative side 114A). Once small tank 446 reaches a high SOC, then the valves 442, 444A, 444B are positioned so that some electrolyte is moved from large negative tank 110 to negative electrodes (114A) of cell stack 114 (via the small tank 446). Some electrolyte from exit of negative cells (e.g. via return conduit 122B between cell stack 114 and sub-system 402) may also be returned to small tank 406 (to help maintain high SOC in the small tank) and some electrolyte may be sent to tank 112 via filter 106B. Some electrolyte may be sent from tank 112 to tank 110 to balance the liquid flows.

At 502, operations connect CSS 402 to VRFB system 108. Here operations differ from operations 202 such as to couple balancing line 329 to CSS 402.

At 504, operations fill VRFB system tanks 110 and 112 with V3/V4 electrolyte, similar to operations 204. Valve 442 may be in a closed position. At 506, operations fill small tank 446 in CSS 402 with V3/V4 electrolyte. This may comprise a separate filing operation or may be filled via tank 110 with open valve 442. In an embodiment, small tank 446 is pre-filled with electrolyte, for example, a pre-purified electrolyte, which can comprise an amount obtained from a previous purification process, which could be V2/V3 or V3/V4, it being understood that V2 will oxidize with exposure to air, leaving just V3.

At 508, with valves 442, 444A and 444B appropriately positioned, operations circulate electrolyte through small tank 446 and otherwise utilize a conventional VRFB charging process to form high-SOC V2/V3 electrolyte in the small tank 446.

At 510, operations reconfigure the CSS (e.g. valves 442, 444A and 444B (depending on the system 400A or 400B, for example) to circulate some negative electrolyte to and from the large negative electrolyte tank 110 while continuing the charging process and maintaining a high-SOC V2/V3 electrolyte in the small tank 446.

At 512, operations perform such that, after all of the V4 in the large negative electrolyte tank has been converted to V3 or V2, the operations begin to mix positive and negative electrolytes while continuing to charge and maintaining high-SOC V2/V3 electrolyte in small tank 466.

At 514, operations filter out solids produced in negative electrolyte (e.g., metal-ion impurities reduced to insoluble metals) using the filters 106A, 106B in the CSS. The valves are configured so that there is simultaneous mixing of the negative and positive electrolytes (via lines 129 and 329), while the charging process is continued to charge and maintain high-SOC V2/V3 electrolyte in small tank 446.

At 516, similar to operations at 212, operations continue to filter the negative electrolyte until it is determined that the electrolyte has been sufficiently purified as further described herein.

At 518, operations disconnect CSS 402 from VRFB System 108,

At 520, similar to operations 216, the charge-formation process may require completion. As such, a conventional electrolyte formation charge process is performed until negative tank 110 is comprised of V2/V3 and positive tank 112 is comprised of V4/V5.

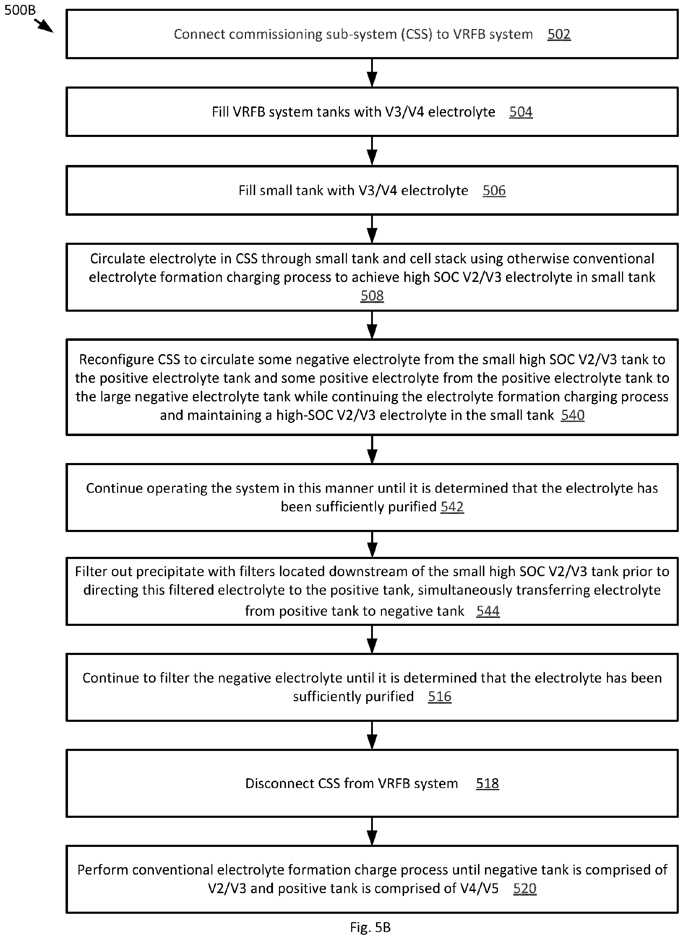

Fig. 5B is a flowchart of operations 500B, in accordance with an embodiment, such as for operation of system 400B. Some of operations 500A (e.g. 502 to 508 and 516 to 520) are also found in operations 500B. In operations 500B, following establishment of a high SOC in the small tank 446, at 540 the operations reconfigure CSS 402 to circulate some negative electrolyte from the small high SOC V2/V3 tank 446 to the positive electrolyte tank 112 and some positive electrolyte 118 from the positive electrolyte tank 112 to the large negative electrolyte tank 110 while continuing the electrolyte formation charging process and maintaining a high-SOC V2/V3 electrolyte in the small tank 446. At 542 operations continue operating the system in this manner until it is determined that the electrolyte has been sufficiently purified. At 544, operations filter out precipitate with filters (106A, 106B) located downstream of the small high SOC V2/V3 tank 446 prior to directing this filtered electrolyte to the positive tank 112, simultaneously transferring electrolyte from positive tank 112 to negative tank 110 (e.g. via line 129). It is understood that some operations overlap in time (e.g. operations 542 and 544).

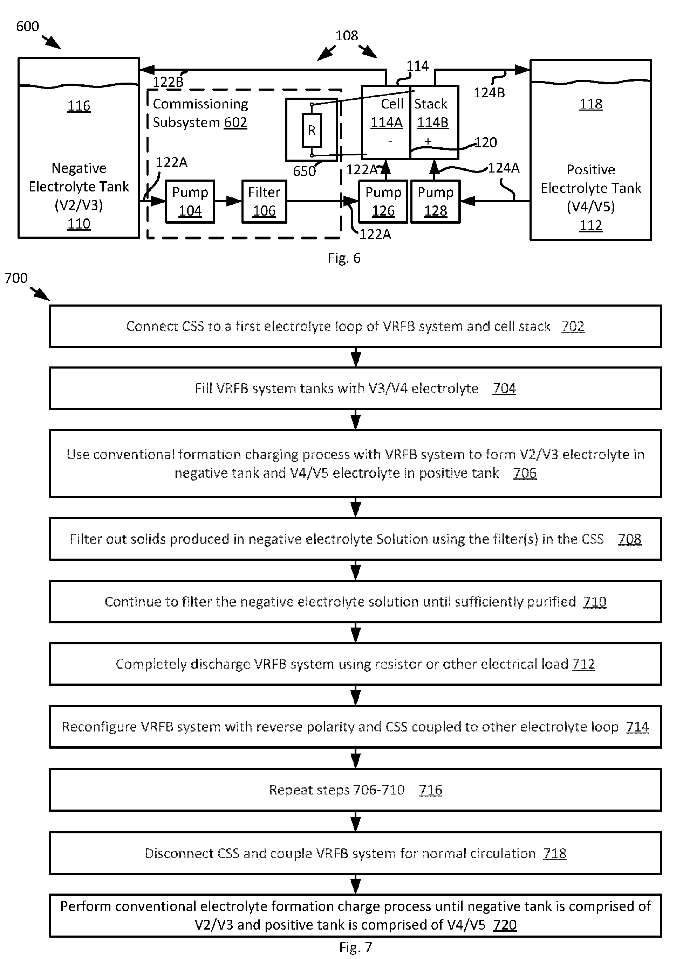

Fig. 6 is an illustration of a battery and commissioning system 600 in accordance with an embodiment. System 600 is similarly configured to system 100, though it could be illustrated similar to system 300. It is noted that in system 600, there is a CSS 602 in place of CSS 102, and CSS 602 is similar to CSS 102. In an embodiment, CSS 602 is similar to CSS 302. However, different from each of CSS 102 and CSS 302, CSS 602 comprises a large resistor 650 coupled to negative and positive sides 114A and 114B of cell stack 114. The large resistor 650 can be used to discharge cell stack 114, for example, prior to performing an operation to reverse a charge polarity of the cell stack 114, as further described as a component of commissioning operations 700 (Fig. 7). A change in polarity can be performed manually, since such a change is only performed one time in operations 700. Operations 700 can begin with cell stack 114 of VRFB system 108 in a reverse polarity, relative to normal use operations of VRFB system 108 so it is in a normal configuration after reversing such polarity. Operations can be performed to commission without transferring electrolyte between tanks 110 and 112. In an embodiment, the CSS is coupled to the positive tank first and operations filter the impurities then the CSS is coupled to the negative tank and operations filtered impurities so when precipitation removal is complete, the negative electrolyte is in the negative tank.

Fig. 7 is a flowchart of operations in accordance with an embodiment such as for commissioning a system 600. Operations 700 are similar to operations 200. Operations 702 to connect the CSS 602 and VRFB system 108 are similar to operations 202 but include connecting the large resistor (e.g. to the cell stack) to enable a later discharge operation. Operations 704, 706, 708 and 710 are substantially the same as operations 204-210. At 712, operations 700 differ from operations 200 in that the VRFB system 108 is completely discharged. Resistor 650 can be used. Other methods can be employed and CSS need not include such a resistor.

At 714, operations reconfigure the VRFB system 108 to have negative electrodes become positive and vice versa - polarity is reversed. CSS 602 is moved to the opposite electrolyte loop (not shown in Fig. 6) such that the pump 104 and filter 106, for example, couple to the other electrolyte tank. At 716, operations 708-710 are repeated in the new configuration of the VRFB system 108. At 718, operations disconnect the CSS 602 for example including disconnecting the resistor. Similar to 216, operations at 720 begin normal VRFB operations.

As noted in respect of operation herein, the filtering related steps are performed until a sufficient purification is determined. Various manners may be employed, such as one based on a total time of charging and filtering at a predetermined SOC (or range thereof). Preferably, a real-time measurement is included that indicates sufficient purification. One or more of the following properties can be monitored/measured and determinations can be performed: i) hydrogen generation as a reduction byproduct; ii) Coulombic Efficiency (CE) of the VRFB System; iii) rate of pressure-drop increase across the filter(s) in the CSS; or iv) a direct measurement of impurities, for example, using mass spectrometry. Examples are described below.

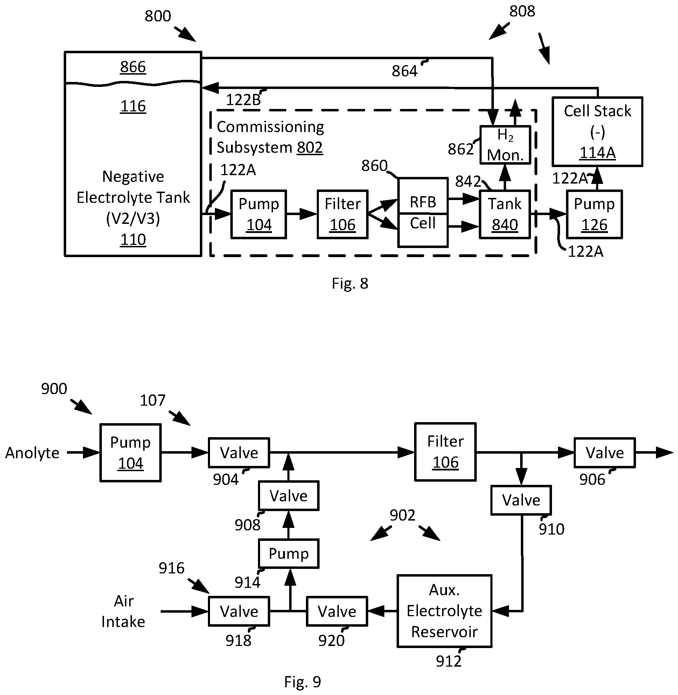

In an embodiment, sufficient purification is determined by monitoring hydrogen generation during the electrolyte-purification process. Fig. 8 is an illustration of a portion of a battery and commissioning system 800, showing a commissioning sub-system 802 and a portion (e.g. anode side components) of a VRFB system 808 adapted for use with commissioning sub-system 802. Fig. 8 shows components for monitoring hydrogen, according to an embodiment. Commissioning sub-system 802 is similar to other commissioning sub-system embodiments described herein. However, commissioning sub-system 802 comprises a small RFB cell 860, i.e. a symmetrical cell with respective - and + sides, and on the order of 5 to 50 square centimeters, coupled after filter 106 and before a small high SOC tank 840. Tank 840 is capable of coupling to pump 126 such as via conduit 122A to feed electrolyte to the negative side 114A of cell stack 114. Small RFB cell 860 is fed the same electrolyte on both sides, beginning as V3/V4 electrolyte and transitioning to V2/V3 as a result of the charging process. A small DC power supply (not shown) can be used to drive small RFB cell 860 to a desired current (or cell potential), which is sufficient to significantly change the SOC of the electrolyte being fed to this cell (e.g., > 5%). On the negative electrode of any VRFB cell, some H₂ may be generated, especially at exceptionally high SOCs (e.g., > 90% SOC) and high current densities. The amount of H₂ generated can be a used as a means of determining if sufficient purification level has been achieved since some of the impurities may act as catalysts for the H₂ generation reaction. This H2 gas makes its way to tank 840, along with the liquid electrolyte, and eventually head space 842 of the small tank. This H₂ detection only needs to be activated after the purification process has been ongoing, since the purpose is to determine when the electrolyte purification level is sufficient.

CSS 802 further comprises a hydrogen measurement device 862 that is in fluid communication with small tank 840 to receive gases therefrom, such as from a head space 842 therein. Gases include hydrogen as a by-product of the reaction in small RFB cell 860. Hydrogen measurement device 862 can be a gas analyzer or a small fuel cell. Hydrogen measurement device 862 is also in fluid communication, such as via conduit 864, with tank 110, preferably the head space 866 thereof, to receive gas therefrom. Gas from tank 110 includes hydrogen as a by-product of the reaction in cell stack 114. Hence, monitoring can be done by: i) measuring H₂ generation from a small dedicated cell in the CSS, e.g. using gas from a head space of the small tank 840; or ii) measuring H₂ in the gas space 866, preferably above the V2/V3 tank 110; or iii) both measuring generation from the small cell and the tank 110 (e.g. gas space 866). In an embodiment Hydrogen measurement device 862 comprises a fuel cell with a current measurement sensor. This H2 can be simply vented to atmosphere, consumed in the fuel cells (if used), or fed to the head space of one of the electrolyte tanks.

An inert-gas purge of the head space 866 and/or 842 may be used to ensure gas flow to the hydrogen measurement device..

The electrolyte purification process can be considered complete when the amount of H₂ generated has been dropped below a desired set point (e.g. a threshold amount) as this indicates that H₂ catalysts have been sufficiently removed from electrolyte in the respective tanks 110, 840. In an embodiment, manual electrolyte maintenance is performed to overcome a change in electrolyte that occurs due to H₂ generation (e.g., as taught in U.S. Patent Application 20160056487 published 25 Feb, 2016, and entitled "Method of maintaining health of a flow battery", which is incorporated herein by reference in its entirety). Completion can be responsive to how infrequently it is desired to do electrolyte maintenance.

In an embodiment, sufficient purification is determined by a proxy-like measurement of monitoring hydrogen generation during the electrolyte-purification process. For example, in an embodiment, a monitoring of a Coulombic Efficiency (CE) of the VRFB System 800 is used as an indirect manner of determining the amount of undesired side reactions (e.g., H₂ generation) that indicate sufficient purification is not completed. The CSS 802 need not be configured exactly as shown in Fig. 8 for such an embodiment. Measurement for sufficiency, in an embodiment, is performed subsequently to formation charging (e.g. after an expected time of completion). CE can be compared to normal CE values such as ones compiled from normal operation with purified electrolytes.

In an embodiment, sufficient purification is determined by measuring the rate of pressure-drop increase across the filter(s) in the CSS. Pressure sensor(s) can be included in an embodiment of the CSS (not shown) to receive pressure information from the filter(s). The electrolyte purification process can be considered complete when the pressure drop across the filters has stopped increasing (or rate of increase is below a set point) as this indicates no more impurities are being captured by the filters. The CSS need not be configured as shown in Fig. 8 for such an embodiment.

In an embodiment, sufficient purification is determined by directly measuring a level of impurities in the electrolyte. A highly-sensitive measurement method can be used such as by using mass spectroscopy techniques (e.g., inductively coupled plasma mass spectrometry (ICP-MS)). The CSS need not be configured as shown in Fig. 8 for such an embodiment.

Operations 200, 500 and 700 and any modifications as described herein above comprise a step of determining when the electrolyte has been sufficiently purified. The following describes operations that may relate to servicing the CSS, for example, after purification operations.

In an embodiment, after all of the electrolyte (e.g. for both tanks 110 and 112) has been purified (i.e., after step 212 in operations 200, after step 516 in operations 500, or after step 716 in operations 700, or after any similar step where purification is complete in similar such operations), one or more steps is performed to ensure that the negative electrodes are cleansed of impurities. For example, in an embodiment, an operational step pumps a small amount of positive electrolyte through the negative electrodes and a step discards this electrolyte (this may be accomplished using a modified CSS). In an embodiment, a CSS is decoupled from the negative electrolyte loop and coupled to receive positive electrolyte such as from a balancing line or the positive loop line. The small pump within the CSS can be operated to direct positive electrolyte into the negative electrodes 114A.

In an embodiment with a small CSS tank (e.g. 840), the tank can be emptied and used as a reservoir for the flushing electrolyte. Care should be taken as such tank (e.g. remaining electrolyte therein after emptying) may be contaminated.

In an embodiment, an operational step rinses the filter(s) in the CSS with V4/V5 (or V3/V4) electrolyte. Rinsing is described further herein below.

In an embodiment, even though sufficient purification is reached, operations extend purification time by continuously mixing some of the positive and negative electrolytes while simultaneously charging the VRFB System. Such a modification can be applied to operations 200 and 500, for example. For operations 200, such modification extends step 210, for example, beyond what is required to fully pass all of the electrolyte through the negative electrodes). In an alternative, such a modification can be an additional step after step 210 or after step 518 of operations 500.

In an embodiment, operations 500 are modified at step 506 to start with high-SOC V2/V3 in the small tank.

In an embodiment such as where a small tank is employed, following the purification process, the electrolyte in the small tank is discarded, since it may include a large amount of impurities, or, in an embodiment, such electrolyte is treated (e.g., filtered) such as by using an external process and then recycled.

In an embodiment, operations can be utilized that start by using concentrated electrolyte in the tanks and adding suitable deionized water until the desired VRFB electrolyte composition is achieved. For example any of steps 204, 504, 506 and 704 can be modified.

Filter media in a CSS that have been exposed to impurities can be rinsed such as to prolong usefulness. In an embodiment, electrolyte filters are rinsed with a VRFB electrolyte that has an average oxidation state (AOS) of ≥ 3.5 after they have been exposed to anolyte for a time sufficient enough to collect impurities. Rinsing can reduce the need for onsite labor and filter changes.

The auxiliary electrolyte collected after rinsing will contain a high concentration of impurities. In an embodiment, the electrolyte can be sent for ICP analysis to validate impurity removal from the system.

Hydrogen generation during the purification can be mitigated as copper and other possible HER (hydrogen evolution reaction) catalysts can be rinsed from the filter when they accumulate in appreciable amounts, at which point purification can resume. In an embodiment, such collected auxiliary electrolyte can then be introduced to electrolyte in another VRFB system having an impurity concentration in the metastable zone, for example, to boost the other VRFB system's critical concentration as needed for precipitation to occur. Once impurities in the electrolyte in that other VRFB system reach the critical concentration, the electrolyte in that other VRFB system can be purified using the CSS.

Fig. 9 shows a rinsing sub-system 900 for a CSS (e.g. CSS 102, without limitation) according to an embodiment. The sub-system 900 couples a rinse loop 902 into the electrolyte line 107. Valves 904 and 906 isolate the filter to the loop 902 while valves 908 and 910 can isolate the loop 902 from the line 107/filter 106.

Loop 902 includes an auxiliary electrolyte reservoir 912 and couples the reservoir 912 with the filter 106 for rinsing filter media (not shown). An auxiliary pump 914 assists to circulate the aux. electrolyte. The electrolyte is preferably one with an AOS ≥ 3.5. Though not shown, reservoir 912 includes a drain or other aperture to remove auxiliary electrolyte such as for use and described. Though not shown, reservoir 912 can include an intake aperture to add clean auxiliary electrolyte for use as a rinsing electrolyte. An air intake line 916 provides air to loop 902 such as between reservoir 912 and pump 914. The intake line can be isolated or not via valves 918 and 920. In an embodiment, (not shown), three way valves are used at valve pairs 904/908, 906/910 and 918/920.

In operation, for example, to filter impurities, electrolyte line valves 904 and 906 are open while loop valves 908 and 910 are closed. The electrolyte (e.g. anolyte) is circulated to filter 106 with an assist by pump 104. Once impurities are collected, operations rinse the filter 106. Line valves 904 and 906 are closed to isolate the filter to the loop line 902 while and valves 908, 910 and 920 are opened and valve 918 is closed. The auxiliary electrolyte is obtained from and returns to the reservoir 912. Once rinsed, the loop is flushed. Air is obtained via the intake line 916 and valve 918. In an embodiment, the aux electrolyte reservoir has a purge aperture to release air. Once rinsed, the loop line can be closed and the electrolyte line opened to resume purification/purification configuration.

It will be apparent to one of ordinary skill in the art that certain benefits may be achieved through the commissioning sub-system and methods herein for purification on site. In an embodiment, the electrolyte is made on-site such as by using a portable electrolyte-mixing system to mix V oxides, concentrated aqueous sulfuric acid, and water. Localized mixing can have significant cost savings.

Aspects of the various embodiments herein will be understood to a person of ordinary skill in the art, including those summarized in the following numbered Statements:

**Statement** 1: A vanadium redox flow battery (VRFB) commissioning system for purifying a VRFB electrolyte comprising: a pump; an impurities separator configured to separate impurities from the VRFB electrolyte; and an electrolyte line, the electrolyte line coupling the pump and the impurities separator, and wherein the electrolyte line is configured to couple into a electrolyte circulation loop of a conventional VRFB system.

**Statement 2:** The VRFB commissioning system of Statement 1 further comprising a housing to contain the pump, the filter and the electrolyte line.

**Statement 3:** The VRFB commissioning system of Statement 2 comprising couplings to couple the electrolyte line through the housing into the electrolyte circulation loop.

**Statement 4:** The VRFB commissioning system of any one of Statements 1 to 3, wherein the impurities separator comprises a fine-media filter, preferably wherein a media of the filter is rated less than 2 micron, further preferably rated less than or equal to 0.5 micron.

**Statement 5:** The VRFB commissioning system of any one of Statements 1 to 5 comprising a high state of charge (SOC) tank configured to provide a reservoir for high SOC negative electrolyte to pro-mote precipitation of the impurities for separation by the impurities separator.

**Statement 6:** The VRFB commissioning system of Statement 6, wherein the high SOC tank is coupled in the electrolyte line between the pump and the impurities separator.

**Statement 7:** The VRFB commissioning system of Statement 6 or 7 wherein: the electrolyte line comprises: a supply portion for coupling into the loop for supplying the VRFB electrolyte to a negative side of a cell stack of the VRFB system; and a return portion for coupling into the loop for receiving the VRFB electrolyte from the negative side of the cell stack; and the VRFB commissioning system comprises a plurality of valves and a loop line coupling the return portion to the high SOC tank to define a commissioning system loop, the commissioning system loop configured for repeated circulation of a quantity of electrolyte within the VRFB commissioning system to the cell stack of the VRFB system.

**Statement 8:** The VRFB commissioning system of Statement 6 or 7 wherein: the electrolyte line comprises: a supply portion for coupling into the loop for supplying the VRFB electrolyte to a negative side of a cell stack of the VRFB system; and a return portion for coupling into the loop for receiving the VRFB electrolyte from the negative side of the cell stack; and the VRFB commissioning system comprises a negative electrode balancing line selectively coupled to the return portion, the negative electrode balancing line configured for coupling into a VFRB balancing line for providing negative electrolyte for tank balancing, the negative electrode balancing line having a balance line impurities separator coupled therein for removing impurities.

**Statement 9:** The VRFB commissioning system of any one of Statements 1 to 4 comprising a balancing line impurities separator configured for coupling to a negative electrolyte balancing line of the VRFB system, the balancing line impurities separator configured for removing impurities in negative electrolyte provided from a negative electrolyte tank of the VRFB system for balancing a positive electrolyte tank of the VRFB system.

**Statement 10:** The VRFB commissioning system of any one of Statements 1 to 9 comprising a thermal management system configured to reduce heat on the electrolyte line.

**Statement 11:** The VRFB commissioning system of Statement 10, wherein the thermal management system comprises a heat exchanger on the on the negative electrolyte line and an air cooled radiator to reduce the heat that may be generated by the electrolyte purification process, preferably wherein the heat exchanger comprises a liquid-liquid heat exchanger, further preferably configured to use a coolant liquid configured to circulate to an air-cooled radiator.

**Statement 12:** The VRFB commissioning system of any one of Statements 1 to 11 comprising a resistive load for discharging the VFRB system.

**Statement 13:** The VRFB commissioning system of any one of Statements 1 to 12 comprising a purification monitoring component having a device for measuring a property of i) the VRFB commissioning system, ii) the VRFB system or both i) and ii), the purification monitoring component configured to determine a sufficient purification of the electrolyte in accordance with the property.

**Statement 14:** The VRFB commissioning system of Statement 13, wherein the property: comprises a hydrogen gas generation measure; a differential pressure measure across the impurities separator; a Columbic effect measure.

**Statement 15:** The VRFB commissioning system of any one of Statements 1 to 14, wherein the VRFB system comprises a positive electrolyte balancing line configured for balancing negative electrolyte tank volume with a positive electrolyte.

**Statement 16:** The VRFB commissioning system of any one of Statements 1 to 15, comprising a rinsing loop coupling an auxiliary electrolyte reservoir configured to circulate an auxiliary electrolyte to rinse the impurities separator and collect the auxiliary electrolyte following a rinsing.

**Statement 17:** A method to charge and purify electrolyte in a vanadium redox flow battery (VRFB) system, the method comprising steps of: performing a formation charge process to charge non-purified electrolyte to a high state of charge (SOC) in the VRFB system; and operating a VRFB commissioning system coupled to the VRFB system to remove impurities from the electrolyte as charged; wherein the VRFB commissioning system comprises an impurities separator and a pump coupled via an electrolyte line, the electrolyte line having at least one coupling configured for electrolyte receiving and returning with the VRFB system.

**Statement 18:** The method of Statement 17 comprising coupling the VRFB commissioning system to a negative-electrolyte loop of the VRFB system.

**Statement 19:** The method of Statement 17 or 18, wherein the electrolyte as charged comprises a negative electrolyte and a positive electrolyte.

**Statement 20:** The method of Statement 19, comprising extending a time for the electrolyte at the high SOC by simultaneously charging and mixing the negative electrolyte and positive electrolyte; and re-moving impurities from the electrolyte as charged at the extended time using the VRFB commissioning system.

**Statement 21:** The method of any one of Statements 18 to 20, as claims 19 and 20 depend from claim 18, wherein the VRFB commissioning system is coupled to the VRFB system to receive the negative electrolyte and to return the negative electrolyte to a negative electrode of a cell stack of the VRFB.

**Statement 22:** The method of any one of Statements 18 to 21, as claims 19 and 20 depend from claim 18, wherein the impurities separator comprises one or more fine-media filters, and wherein the coupling locates the impurities separator between a negative electrolyte tank of the VRFB and the negative electrode to remove the impurities.

**Statement 23:** The method of Statement 22, wherein a size of the one or more fine-media filters is selected to filter particles of less than 2 micron, and preferably less than or equal to 0.5 micron.

**Statement 24:** The method of any one of Statements 17 to 23, wherein at least some of the impurities comprise metal ions that have been reduced by exposure to highly charged negative electrolyte.

**Statement 25:** The method of any one of Statements 19 to 23, wherein VRFB commission system comprises a reservoir of highly-charged negative electrolyte through which to circulate negative electrolyte received from the VRFB system to promote precipitation of the impurities.

**Statement 26:** The method of any one of Statements 17 to 25 comprising determining a real-time measurement of purification and stopping removing the impurities in response to the real-time measurement of purification.

**Statement 27:** The method of Statement 26, wherein the real-time measurement comprises a hydrogen generation rate.

**Statement 28:** The method of Statement 26, wherein the real-time measurement comprises a pressure drop measurement across the impurities separator.

**Statement 29:** The method of any one of Statements 17 to 28, wherein the VRFB system is defined according to any one of the claims 1 to 16. It will be understood that the configuration of the VRFB system is defined to align with any respective steps of the method and not in conflict therewith.

Practical implementation may include any or all of the features described herein. These and other aspects, features and various combinations may be expressed as methods, apparatus, systems, means for performing functions, program products, and in other ways, combining the features described herein. A number of embodiments have been described. Nevertheless, it will be understood that various modifications can be made without departing from the spirit and scope of the processes and techniques described herein. In addition, other steps can be provided, or steps can be eliminated, from the described process, and other components can be added to, or removed from, the described systems. Accordingly, other embodiments are within the scope of the following claims.

Throughout the description and claims of this specification, the word "comprise" and "contain" and variations of them mean "including but not limited to" and they are not intended to (and do not) exclude other components, integers or steps. Throughout this specification, the singular encompasses the plural unless the context requires otherwise. In particular, where the indefinite article is used, the specification is to be understood as contemplating plurality as well as singularity, unless the context requires otherwise.

Features, integers, characteristics, or groups described in conjunction with a particular aspect, embodiment or example of the invention are to be understood to be applicable to any other aspect, embodiment or example unless incompatible therewith. All of the features disclosed herein (including any accompanying claims, abstract and drawings), and/or all of the steps of any method or process so disclosed, may be combined in any combination, except combinations where at least some of such features and/or steps are mutually exclusive. The invention is not restricted to the details of any foregoing examples or embodiments. The invention extends to any novel one, or any novel combination, of the features disclosed in this specification (including any accompanying claims, abstract and drawings) or to any novel one, or any novel combination, of the steps of any method or process disclosed.

## Claims

1. A vanadium redox flow battery (VRFB) commissioning system for purifying a VRFB electrolyte comprising:
a pump;
an impurities separator configured to separate impurities from the VRFB electrolyte; and
an electrolyte line, the electrolyte line coupling the pump and the impurities separator, and wherein the electrolyte line is configured to couple into a electrolyte circulation loop of a conventional VRFB system.

2. The VRFB commissioning system of claim 1 further comprising:
a housing to contain the pump, the filter and the electrolyte line; and
couplings to couple the electrolyte line through the housing into the electrolyte circulation loop.

3. The VRFB commissioning system of any one of claims 1 to 2, wherein the impurities separator comprises a fine-media filter, preferably wherein a media of the filter is rated less than 2 micron, further preferably rated less than or equal to 0.5 micron.

4. The VRFB commissioning system of any one of claims 1 to 3 comprising a high state of charge (SOC) tank configured to provide a reservoir for high SOC negative electrolyte to promote precipitation of the impurities for separation by the impurities separator; and optionally wherein the high SOC tank is coupled in the electrolyte line between the pump and the impurities separator.

5. The VRFB commissioning system of claim 4 wherein, either:
the electrolyte line comprises:
(i) a supply portion for coupling into the loop for supplying the VRFB electrolyte to a negative side of a cell stack of the VRFB system; and
(ii) a return portion for coupling into the loop for receiving the VRFB electrolyte from the negative side of the cell stack; and
the VRFB commissioning system comprises a plurality of valves and a loop line coupling the return portion to the high SOC tank to define a commissioning system loop, the commissioning system loop configured for repeated circulation of a quantity of electrolyte within the VRFB commissioning system to the cell stack of the VRFB system; or
the electrolyte line comprises:
(iii) a supply portion for coupling into the loop for supplying the VRFB electrolyte to a negative side of a cell stack of the VRFB system; and
(iv) a return portion for coupling into the loop for receiving the VRFB electrolyte from the negative side of the cell stack; and
the VRFB commissioning system comprises a negative electrode balancing line selectively coupled to the return portion, the negative electrode balancing line configured for coupling into a VFRB balancing line for providing negative electrolyte for tank balancing, the negative electrode balancing line having a balance line impurities separator coupled therein for removing impurities.

6. The VRFB commissioning system of any one of claims 1 to 3 comprising a balancing line impurities separator configured for coupling to a negative electrolyte balancing line of the VRFB system, the balancing line impurities separator configured for removing impurities in negative electrolyte provided from a negative electrolyte tank of the VRFB system for balancing a positive electrolyte tank of the VRFB system.

7. The VRFB commissioning system of any one of claims 1 to 6 comprising a thermal management system configured to reduce heat on the electrolyte line; preferably
wherein the thermal management system comprises a heat exchanger on the on the negative electrolyte line and an air cooled radiator to reduce the heat that may be generated by the electrolyte purification process, preferably wherein the heat exchanger comprises a liquid-liquid heat exchanger, further preferably configured to use a coolant liquid configured to circulate to an air-cooled radiator.

8. The VRFB commissioning system of any one of claims 1 to 7 comprising a resistive load for discharging the VFRB system.

9. The VRFB commissioning system of any one of claims 1 to 8 comprising a purification monitoring component having a device for measuring a property of i) the VRFB commissioning system, ii) the VRFB system or both i) and ii), the purification monitoring component configured to determine a sufficient purification of the electrolyte in accordance with the property; preferably wherein the property: comprises a hydrogen gas generation measure; a differential pressure measure across the impurities separator; a Columbic effect measure.

10. The VRFB commissioning system of any one of claims 1 to 9, wherein the VRFB system comprises a positive electrolyte balancing line configured for balancing negative electrolyte tank volume with a positive electrolyte.

11. The VRFB commissioning system of any one of claims 1 to 10, comprising a rinsing loop coupling an auxiliary electrolyte reservoir configured to circulate an auxiliary electrolyte to rinse the impurities separator and collect the auxiliary electrolyte following a rinsing.

12. A method to charge and purify electrolyte in a vanadium redox flow battery (VRFB) system, the method comprising steps of:
performing a formation charge process to charge non-purified electrolyte to a high state of charge (SOC) in the VRFB system; and
operating a VRFB commissioning system coupled to the VRFB system to remove impurities from the electrolyte as charged;
wherein the VRFB commissioning system comprises an impurities separator and a pump coupled via an electrolyte line, the electrolyte line having at least one coupling configured for electrolyte receiving and returning with the VRFB system.

13. The method of claim 12 comprising coupling the VRFB commissioning system to a negative-electrolyte loop of the VRFB system; and preferably wherein at least some of the impurities comprise metal ions that have been reduced by exposure to highly charged negative electrolyte.

14. The method of claim 12 or 13, wherein the electrolyte as charged comprises a negative electrolyte and a positive electrolyte.

15. The method of claim 14, comprising extending a time for the electrolyte at the high SOC by simultaneously charging and mixing the negative electrolyte and positive electrolyte; and removing impurities from the electrolyte as charged at the extended time using the VRFB commissioning system.

16. The method of any one of claims 13 to 15, when claims 14 and 15 are depend on claim 13:
wherein the VRFB commissioning system is coupled to the VRFB system to receive the negative electrolyte and to return the negative electrolyte to a negative electrode of a cell stack of the VRFB; and/or
wherein the impurities separator comprises one or more fine-media filters, and wherein the coupling locates the impurities separator between a negative electrolyte tank of the VRFB and the negative electrode to remove the impurities; preferably
wherein a size of the one or more fine-media filters is selected to filter particles of less than 2 micron, and preferably less than or equal to 0.5 micron.

17. The method of any one of claims 14 to 16, wherein VRFB commission system comprises a reservoir of highly-charged negative electrolyte through which to circulate negative electrolyte received from the VRFB system to promote precipitation of the impurities.

18. The method of any one of claims 12 to 17 comprising determining a real-time measurement of purification and stopping removing the impurities in response to the real-time measurement of purification; and preferably wherein:
the real-time measurement comprises a hydrogen generation rate; or
the real-time measurement comprises a pressure drop measurement across the impurities separator.
